# EUROPEAN PATENT APPLICATION

(11) **EP 3 715 197 A1**
(43) Date of publication of application: **30.09.2020**
(21) Application number: 18881865.2
(22) Date of filing: 25.04.2018
(51) Int. Cl.: B60S 5/06

(54) **AUTOMATIC BATTERY EXCHANGE PLATFORM FOR ELECTRIC VEHICLE AND BATTERY EXCHANGE STATION**

(30) Priority: 22.11.2017 CN 201711174055
(71) Applicant: NIO Nextev Limited, Central, Hong Kong (HK)
(72) Inventor: DING, Xikun, Jiading Shanghai 201804 (CN); LI, Nan, Jiading Shanghai 201804 (CN); TIAN, Xiaotao, Jiading Shanghai 201804 (CN); MA, Yongyue, Jiading Shanghai 201804 (CN)
(74) Representative: Vossius & Partner Patentanwälte Rechtsanwälte mbB
(86) International application number: PCT/CN2018/084437
(87) International publication number: WO 2019/100659

(57) **Abstract**

The present invention provides an automatic battery swap platform (1) for an electric vehicle and a battery swap station. The battery swap platform (1) comprises a battery swap mechanism (2) that is used for executing a battery swap operation and that comprises a tightening gun (22) and a battery conveying part (21); the tightening gun (22) is provided with a first position that is lower than the battery conveying part (21) and a second position that is higher than the battery conveying part (21); one of the tightening gun (22) and the battery conveying part (21) may be lifted relative to the other, and the battery conveying part (21) is used for conveying a battery pack in the width direction of a vehicle; support positioning mechanisms (3) that are located at two ends of the battery swap mechanism (2) along the longitudinal direction of the vehicle, being used for supporting each wheel; and a lifting mechanism (4), which is connected to the battery swap mechanism (2), being used for lifting the entire battery swap mechanism (2). The battery swap station comprises the battery swap platform (1) and a battery pack storage device (5) that is located at one or two sides of the battery swap platform (1) along the width direction of the vehicle. During battery swap, the vehicle need not be lifted and the overall height of the battery swap station may be controlled; and battery packs may be lifted and stacked without a complex lifting mechanism, the battery swap procedure is simple, and battery swap efficiency is high.

## Description

### Field of the Invention

The present invention relates to the technical field of battery swap of electric vehicles, in particular to an automatic battery swap platform for an electric vehicle and a battery swap station.

### Background of the Invention

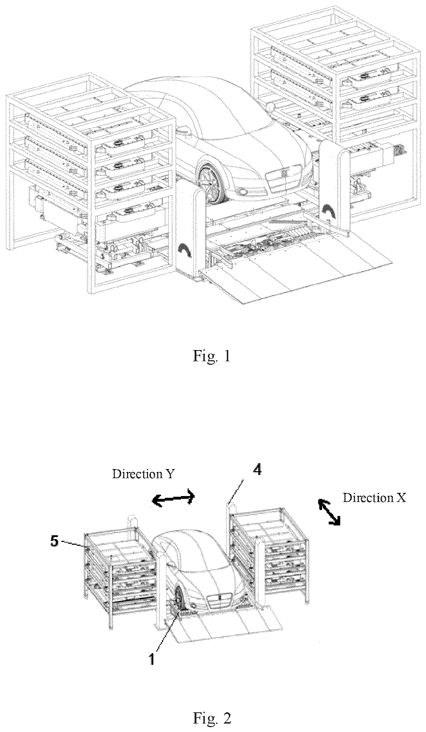

With the development of battery charging and swap facilities of electric vehicles, more and more vehicle owners select an automatic battery swap station to supplement electric energy for the electric vehicles. An automatic battery swap station designed by the applicant before the present invention is as shown in Fig. 1. According to the automatic battery swap station as shown in Fig. 1, a middle area is an electric vehicle lift and battery swap area, also being a battery pack lift and swap area, and two ends along a width direction of a vehicle are provided with battery pack storage areas; a battery swap trolley track penetrates through the whole battery charging and swap station, and a battery swap trolley may keep moving under a battery pack storage device; and the battery swap trolley also serves as a battery pack swap trolley, and docking with a height direction of the battery pack storage device is realized at the bottom of the trolley by virtue of a lifting mechanism. However, the automatic battery swap station as shown in Fig. 1 at least has disadvantages as follows:
(1) during battery swap, the electric vehicle needs to be lifted to a preset battery swap height, high-power motor drive is needed, the preset battery swap height is generally large, and the operation is unsuitable for an underground garage;
(2) two battery swap trolleys need to be matched for battery swap and also need to be lifted by the lifting mechanism while serving as battery pack swap trolleys, motor drive is more, the structure is complex, and cost is high; and
(3) the lifting mechanism of the battery swap trolleys occupies a large bottom space, a battery pack lifting and stacking structure is poor in stability, battery pack exchange time is long, a battery swap process is complicated, battery swap efficiency is low, and user experience is poor.

### Summary of the Invention

Technical problems to be solved in the present invention are to provide an automatic battery swap platform for an electric vehicle and a battery swap station. During battery swap, a vehicle does not need to be lifted, high-power motor drive for vehicle lift is saved, and entire heights of the battery swap platform and the battery swap station are controlled; battery packs may be lifted and stacked without a complex lifting mechanism, a battery swap process is simple, battery pack exchange time is short, battery swap efficiency is high, and user experience is improved.

In order to solve the aforementioned technical problems, the present invention provides the automatic battery swap platform for the electric vehicle, including:
a battery swap mechanism used for executing a battery swap operation, wherein the battery swap mechanism includes a tightening gun and a battery conveying part; the tightening gun is provided with a first position that is lower than the battery conveying part and a second position that is higher than the battery conveying part; one of the tightening gun and the battery conveying part may be lifted relative to the other, so that the tightening gun is switched between the first position and the second position relative to the battery conveying part; the battery conveying part is used for conveying a battery pack in a direction Y, wherein the direction Y is a vehicle width direction;
support positioning mechanisms that are located at two ends of the battery swap mechanism along a direction X, being used for supporting each wheel, wherein the direction X is a vehicle length direction; and
a lifting mechanism, which is connected to the battery swap mechanism, being used for lifting the entire battery swap mechanism.

Further, two sides of the battery swap platform along the direction Y are provided with passing areas through which wheels may pass; and the battery conveying part at least extends to one of the passing areas along the direction Y, so as to convey the battery pack with a battery pack storage device outside the battery swap platform.

Further, two sides of the battery swap mechanism along the direction Y are further provided with auxiliary supporting pieces; the auxiliary supporting pieces may move relative to the battery conveying part, so as to be switched between a first state and a second state;
in the first state, the auxiliary supporting pieces are located on the battery conveying part in the passing area, so as to provide support for the wheels; and
in the second state, the auxiliary supporting pieces are located below or outside the battery conveying part, so as to avoid interfering with conveying of the battery pack.

Further, the battery swap mechanism further includes a tightening gun tray used for fixing the tightening gun.

Further, two sides of the tightening gun tray along the direction X are respectively provided with the battery conveying part.

Further, the battery conveying part includes rollers arranged along the direction Y.

Further, the battery swap platform further includes an ejector mechanism used for acting to the vehicle chassis, so as to adjust parallelism between the vehicle chassis and the battery swap mechanism.

Further, the ejector mechanism may be lifted relative to the battery conveying part, so as to move to a position that is higher than or lower than the battery conveying part.

Further, the battery swap platform further includes guide rails extending along the direction X, wherein the battery swap mechanism is arranged on the guide rails and may move in the direction X along the guide rails.

According to another aspect of the present invention, an automatic battery swap station for an electric vehicle is provided. The automatic battery swap station includes the aforementioned battery swap platform, and further includes a battery pack storage device located on one side or two sides of the battery swap platform along a direction Y.

Further, the battery conveying part extends to the battery pack storage device along the direction Y, so as to perform battery pack exchange with the battery pack storage device.

Further, the battery pack storage device is provided with a multilayer battery pack storage unit arranged along a height direction; the battery swap mechanism is provided with a position that is basically flush with the support positioning mechanisms; and at the position, the battery conveying part is flush with the battery pack storage unit on one of the layers.

Further, a lift range of the lifting mechanism covers each layer of the battery pack storage unit, so that battery pack exchange is performed between the battery conveying part and the battery pack storage unit on each layer.

Further, two sides of the battery swap mechanism along the direction Y are respectively provided with one pair of lifting mechanisms; and the battery pack storage device is located between the pair of lifting mechanisms along the direction X and partially located in a space between the pair of lifting mechanisms.

Compared with the prior art, the present invention has obvious advantages and beneficial effects. Through the aforementioned technical solutions, the automatic battery swap platform for the electric vehicle and the battery swap station in the present invention may achieve considerable technological progress and practicality, have industrialized extensive utilization values, and at least have the following advantages:
(1) the battery swap mechanism is integrated on the battery swap platform, the battery swap operation is executed by lifting the battery swap mechanism during battery swap, the vehicle does not need to be lifted, high-power motor drive for vehicle lift is saved, the entire heights of the battery swap platform and the battery swap station are controlled, and the battery swap platform and the battery swap station are applicable to small-height parking spaces such as underground garages;
(2) extra battery swap trolleys and complex lifting mechanisms are not needed, battery swap between the battery swap platform and the vehicle may be completed by virtue of the battery swap mechanism arranged on the battery swap platform, the structure is simple, and the cost is low;
(3) the battery pack storage device is arranged in a layered manner, is capable of storing multiple battery packs, increases storage quantity of the battery packs and is provided with multiple battery swap ports, and the battery swap process is simple; and
(4) the battery swap mechanism occupies a small bottom space, stability of the battery pack lifting and stacking structure is high, the battery pack swap time is short, the battery swap process is simple, the battery swap efficiency is high, and the user experience is improved.

The above description is only an overview of the technical solutions of the present invention. In order to understand the technical means of the present invention more clearly, the present invention can be implemented in accordance with the contents of the specification, and in order to make the above and other objects, features and advantages of the present invention more obvious and understandable, preferred embodiments are listed below and are described in detail below in combination with drawings.

### Brief Description of the Drawings

Fig. 1 is a schematic diagram of layout of an automatic battery swap station for an electric vehicle in the prior art;
Fig. 2 is a schematic diagram of an automatic battery swap station for an electric vehicle provided by one embodiment of the present invention;
Fig. 3 is a schematic diagram of a main frame of an automatic battery swap station for an electric vehicle provided by one embodiment of the present invention;
Fig. 4 is a schematic diagram of a battery swap process of an automatic battery swap station for an electric vehicle provided by one embodiment of the present invention.

**Reference Signs:**

| | | | |
|---|---|---|---|
| 1: | battery swap platform | 2: | battery swap mechanism |
| 3: | support positioning mechanism | 4: | lifting mechanism |
| 5: | battery pack storage device | 6: | passing area |
| 7: | ejector mechanism | 8: | guide rail |

### Detailed Description of the Embodiments

In order to further illustrate the technical means and effects adopted in the present invention to achieve the intended purpose of the invention, specific embodiments and effects of an automatic battery swap platform for an electric vehicle and a battery swap station proposed in accordance with the present invention are described in detail below, in conjunction with the drawings and preferred embodiments.

As shown in Fig. 2-4, embodiments of the present invention provide an automatic battery swap station for an electric vehicle and a battery swap platform 1 thereof. The battery swap platform 1 includes a battery swap mechanism 2, support positioning mechanisms 3 and a lifting mechanism 4, wherein the battery swap mechanism 2 is used for executing a battery swap operation and includes a tightening gun 22 and a battery conveying part 21; the tightening gun 22 is provided with a first position that is lower than the battery conveying part 21 and a second position that is higher than the battery conveying part 21; one of the tightening gun 22 and the battery conveying part 21 may be lifted relative to the other, so that the tightening gun 22 is switched between the first position and the second position relative to the battery conveying part 21. The battery conveying part 21 is used for conveying a battery pack in a direction Y. The support positioning mechanisms 3 are located at two ends of the battery swap mechanism 2 along a direction X and are used for supporting each wheel. The lifting mechanism 4 is connected to the battery swap mechanism 2 and is used for lifting the entire battery swap mechanism 2. It should be understood that, the direction X is a vehicle length direction, and the direction Y is a vehicle width direction.

The automatic battery swap station in the present invention further includes a battery pack storage device 5 located on one side or two sides of the battery swap platform 1 along a direction Y. The battery conveying part 21 extends to the battery pack storage device 5 along the direction Y, so as to perform battery pack swap with the battery pack storage device 5.

It should be noted that, the aforementioned battery pack in the present invention includes an electricity-lack battery pack and a full-electricity battery pack. The electricity-lack battery pack refers to a battery pack removed from the vehicle during battery swap, and the battery pack removed from the vehicle is not defined as a complete electricity-lack state. In a similar way, the full-electricity battery pack refers to a battery pack installed for the vehicle during battery swap, and the battery pack installed for the vehicle is not defined as a complete full-electricity state.

The electric vehicle in the present invention refers to a vehicle with a replaceable battery pack in general, is not defined as a pure electric vehicle only, and may also be a hybrid vehicle.

Main components of the battery swap platform 1 and the automatic battery swap station are respectively described below in detail:

### (I) Support positioning mechanism

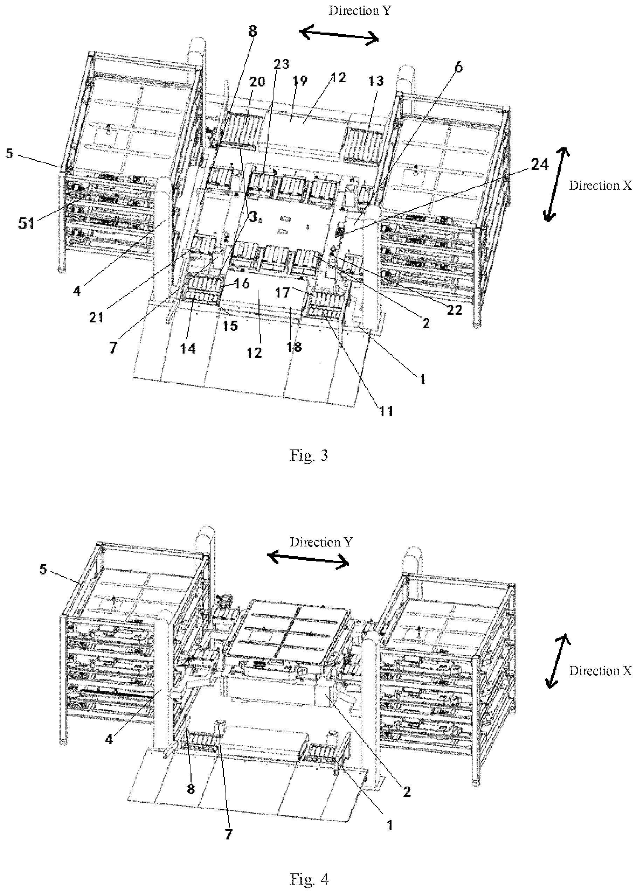

As shown in Fig. 3, as an example, the battery swap platform 1 includes a first positioning part 11, a second positioning part 12 and a supporting part 13, wherein the first positioning part 1 is used for supporting front wheels of the vehicle, and while driving into grooves 14, the front wheels of the vehicle are determined to drive into stop positions of the vehicle along the direction X. The first positioning part 11 include the grooves 14 including first groove side walls 15 and second groove side walls 16 distributed along the direction X; a V-shaped included angle is formed between each first groove side wall 15 and each second groove side wall 16; and a first roller seat 17 is respectively arranged on each groove side wall. The second positioning part 12 performs Y-direction positioning on the vehicle and includes front-wheel Y-direction positioning units 18 and rear-wheel Y-direction positioning units 19, wherein the front-wheel Y-direction positioning units 18 and the rear-wheel Y-direction positioning units 19 are respectively arranged at corresponding positions of the front wheels and the rear wheels of the vehicle and respectively perform Y-direction positioning on the front wheels and rear wheels of the vehicle. As an example (not illustrated in the figure), the front-wheel Y-direction positioning units 18 and the rear-wheel Y-direction positioning units 19 may include push rod motors and push rods arranged at two ends of the push rod motors along the direction Y, the push rods are driven to move by the push rod motors, and the front and rear wheels are pushed to move by the push rods. The supporting part 13 includes second roller seats 20. The first roller seats 17 and the second roller seats 20 all include multiple rollers arranged along the direction Y and can roll with movement of the wheels along the direction Y. In the wheel moving process, the first roller seats 17 and the second roller seats 20 may decrease frictional force of corresponding supporting wheels, so as to facilitate movement of the wheels along the direction Y. Battery swap is performed when the vehicle drives into the battery swap platform 1, the vehicle does not need to be lifted, and the height of the battery swap platform 1 can be controlled within 400mm.

### (II) Battery swap mechanism

As shown in Fig. 3, as an example, the battery swap mechanism 2 includes a battery conveying part 21 and a tightening gun 22, and may further include a tightening gun tray 24 used for fixing the tightening gun 22. The tightening gun tray 24 may be lifted. The tightening gun 22 is lifted along lift of the tightening gun tray 24. The battery conveying part 21 is respectively arranged on two sides of the tightening gun tray 24 along the direction X.

When the battery conveying part 21 is needed for supporting and conveying battery packs, the tightening gun 22 is correspondingly located at a first position that is lower than the battery conveying part 21; and when the battery packs need to be removed and installed by the tightening gun 22, the tightening gun 22 is correspondingly located at a second position that is higher than the battery conveying part 21. Two sides of the battery swap platform 1 along the direction Y are provided with passing areas 6 through which wheels may pass. The battery conveying part 21 at least extends to one of the passing areas 6 along the direction Y, so as to convey the battery packs with a battery pack storage device 5 outside the battery swap platform 1.

On two sides of the battery swap mechanism 2 along the direction Y, the battery swap platform further includes auxiliary supporting pieces (not illustrated in the figure). The auxiliary supporting pieces may move relative to the battery conveying part 21, so as to be switched between a first state and a second state. In the first state, the auxiliary supporting pieces are located on the battery conveying part 21 in the passing area 6, so as to provide support for the wheels; and in the second state, the auxiliary supporting pieces are located below or outside the battery conveying part 21, so as to avoid interfering with conveying of the battery packs.

It should be noted that, the auxiliary supporting pieces are mainly used for separating the wheels from the battery conveying part 21 located in the passing area 6 when the wheels pass through the passing area 6, so as to decrease the frictional force and facilitate vehicle driving. The auxiliary supporting pieces may have multiple arrangement forms, as long as the auxiliary supporting pieces can be switched in the aforementioned states. For example, the auxiliary supporting pieces may be platy pieces or gridded pieces. Extension and retraction of the auxiliary supporting pieces may have multiple motion modes, such as one or several in horizontal motion, up-and-down motion or turnover motion relative to the battery conveying part 21. In one example, the auxiliary supporting pieces are arranged in the battery pack storage device 5 in a retractable manner. When the vehicle drives in, the auxiliary supporting pieces extend out of the battery pack storage device 5 and cover the battery conveying part 21 located in the passing area 6. After parking, the auxiliary supporting pieces retract into the battery pack storage device 5.

As one example, the battery swap mechanism 2 is provided with a position that is basically flush with the support positioning mechanisms 3. At such a position, the vehicle may be allowed to enter or exit from the battery swap platform 1. Definition of 'basically flush with' is based on that the vehicle is not prevented from entering or exiting from the battery swap platform 1. Moreover, at the position, the battery conveying part 21 is flush with a battery pack storage unit 51 on one layer (e.g., the bottommost layer) of the battery pack storage device 5. In one example, the battery pack storage unit 51 on the bottommost layer of the battery pack storage device 5 is used for receiving an electricity-lack battery pack removed from the vehicle and providing a full-electricity battery pack for the vehicle.

The battery swap platform 1 may further include an ejector mechanism 7 used for acting to the vehicle chassis, so as to adjust parallelism between the vehicle chassis and the battery swap mechanism 2. It should be noted that, an effect of the ejector mechanism 7 is to adjust the parallelism of the chassis, so as to avoid battery swap difficulty caused by tilt of the chassis. After ejection, even if the vehicle is not jacked up, each wheel is still supported on the corresponding support positioning mechanisms 3. It should be understood that, the ejector mechanism 7 may lift relative to the battery conveying part 21, so as to extend to the chassis for ejecting.

A specific arrangement position of the ejector mechanism 7 may be determined according to the size of the chassis of a battery swap vehicle and the size of a battery pack. For example, the ejector mechanism 7 may be arranged in a range where the battery swap mechanism 2 is located, such as a range where the battery swap mechanism 2 is located, as shown in Fig. 3-4. Then, the ejector mechanism 7 may be further lifted relative to the battery conveying part 21, so as to extend to a position that is higher than the battery conveying part 21 (for an ejecting operation) or retract to a position that is lower than the battery conveying part 21 (for avoiding interfering with conveying of the battery pack). Or, the ejector mechanism 7 may also be arranged beyond the range where the battery swap mechanism 2 is located, and then interference with conveying of the battery pack does not exist, so an extra lifting action is not needed.

By taking manners as shown in Fig. 3-4 as an example, during operation, the vehicle drives into the battery swap platform 1, after positioning and parking, the vehicle chassis is jacked up by the ejector mechanism 7 so as to be parallel to a plane of the battery swap mechanism 2, so as to increase battery swap accuracy and efficiency. Then, the tightening gun 22 is lifted to a height higher than the battery conveying part 21, and the battery swap mechanism 2 ascends to a battery swap height along the lifting direction, so that the tightening gun 22 contacts with the bottom of the vehicle. In the process, a tightening motor is started, and the electricity-lack battery pack is removed by the tightening gun 22; and the battery swap mechanism 2 descends onto the battery swap platform 1, the tightening gun 22 descends to a height that is not higher than the battery conveying part 21, and the ejector mechanism 7 descends to the height that is not higher than the battery conveying part 21, so that the battery pack is supported by the battery conveying part 21. It should be understood that, descending of the battery swap mechanism 2 and descending of the tightening gun 22 are in any particular order. After the tightening gun 22 descends to a height that is lower than the battery conveying part 21, the tightening gun 22 separates from the battery pack and descends to the height that is lower than the battery conveying part 21, so that the battery pack contacts with the battery conveying part 21. A manner of lifting the tightening gun 22 between the first position and the second position may be realized by a manner of entirely lifting the tightening gun tray 24 or directly lifting the tightening gun 22. It should be noted that, multiple tightening guns 22 may be arranged and distributed on the battery swap mechanism 2 and correspond to positions of lock screws of the battery packs of the vehicle one by one. Each tightening gun 22 is in charge of removing one screw. The battery swap efficiency is improved.

The battery conveying part 21 includes multiple in-line roller seats 23 arranged at intervals along the direction Y. The in-line roller seats 23 include multiple rollers that are arranged along the direction Y and can drive the battery packs to move along the vehicle width direction, so that the battery packs are conveyed between the battery swap platform 1 and the battery pack storage device 5. As shown in Fig. 3, as one example, the ejector mechanism 7 may be arranged in a clearance between two in-line roller seats 23. It should be understood that, the battery conveying part 21 is not limited to a roller structure. The above description is only an example. The battery conveying part 21 may also be other structures, such as a conveyor belt structure capable of completing conveying of the battery packs. Two battery conveying parts 21 may be arranged at an interval along the vehicle length direction.

Considering that battery packs of different vehicle models may have different installation positions, for example, the battery packs of some vehicles are located between the front wheels and rear wheels of the chassis, after the electricity-lack battery pack is removed, the battery conveying parts 21 may directly convey the electricity-lack battery pack from the chassis to the battery pack storage device 5. However, the installation positions of the battery packs of some vehicles may be located at positions close to the front wheels or positions close to the rear wheels at the vehicle bottom. After the electricity-lack battery pack is removed, the battery swap mechanism 2 needs to move to a position between the front wheel and the rear wheel of the vehicle along the direction X, and the battery pack can be conveyed out of the vehicle bottom, otherwise conveying of the battery pack cannot be completed due to blocking of the front wheel and the rear wheel. Therefore, in order to enable the automatic battery swap platform 1 and the battery swap station to be applicable to more vehicle models, guide rails 8 extending along the direction X may be arranged on the battery swap platform 1. The battery swap mechanism 2 is arranged on the guide rails 8, so that the battery swap mechanism 2 can move through the guide rails 8 along the direction X. On one hand, positioning of the battery pack is conveniently removed; on the other hand, the battery pack conveniently enters or exits from the position between the front and rear wheels, so that the battery swap station may be applicable to battery swap of multiple vehicle models.

According to an example as shown in Fig. 4, the battery swap mechanism 2 serves as a whole and may also be driven by a lifting mechanism 4 to lift along a height direction. The lifting mechanism 4 is arranged on the battery swap platform 1 and connected with the battery swap mechanism 2. The battery swap mechanism 2 is lifted along the height direction, so as to perform battery swap with the battery pack storage unit 51.

In the process of removing the battery pack, the battery swap mechanism 2 serving as a whole may be driven to lift by the lifting mechanism 4. This situation is particularly applicable to a condition that a lift height of the tightening gun 22 is limited, for example, when an ascending height of the tightening gun 22 is only slightly higher than the battery conveying part 21, as shown in Fig. 4. In some other manners, if the ascending height of the tightening gun 22 can reach a battery swap position, the battery swap mechanism may also be not lifted when the battery pack is removed.

### (III) Battery pack storage device

It should be noted that, the quantity of the battery pack storage devices 5 may be one or more. The battery pack storage devices are arranged on one side or two sides of the battery swap platform 1 along the direction Y.

As shown in Fig. 2-4, as an example, totally two battery pack storage devices 5 are respectively arranged on two sides of the battery swap platform 1 along the direction Y. Each of the battery pack storage devices 5 may include multiple layers of battery pack storage units 51 arranged along the height direction. As mentioned before, when the battery swap mechanism 2 is located at a position that is basically flush with the support positioning mechanisms 3 in the height direction, at least one layer of the battery pack storage units 51 is flush with the height of the battery conveying part 21. A lift range of the lifting mechanism 4 covers each layer of the battery pack storage units 51, so that battery pack swap is performed between the battery conveying part 21 and each layer of the battery pack storage units 51. Two sides of the battery swap mechanism 2 along the direction Y are respectively provided with one pair of lifting mechanisms 4, and the battery pack storage device 5 is located between the pair of lifting mechanisms 4 along the direction X and partially located in a space between the pair of lifting mechanisms 4.

In order to increase the storage quantity of the battery packs, the battery pack storage units 51 may be arranged on no less than three layers. Each layer of the battery pack storage units 51 at least can store one battery pack. As shown in Fig. 3, as an example, the battery pack storage device 5 includes three layers of battery pack storage units 51, and each layer of the battery pack storage units 51 can store one battery pack. However, it should be understood that, the number of layers of the battery pack storage units 51 of the battery pack storage device 5 and the quantity of the battery packs that can be contained by each layer of the battery pack storage units 51 may be adaptively adjusted according to specific user requirements, space requirements and other factors. The battery pack storage device 5 adopts a multilayer structure, so that the storage quantity of the battery packs of the automatic battery swap station can be increased, and a floor space of the automatic battery swap station is saved.

As shown in Fig. 3 and Fig. 4, during battery swap, the bottommost-layer battery pack storage unit 51 at one end of the battery swap platform 1 is in an idle state and is used for receiving the electricity-lack battery pack, while the bottommost-layer battery pack storage unit 51 at the other end of the battery swap platform 1 is provided with a full-electricity battery pack and is used for providing the full-electricity battery pack for the battery swap mechanism 2. It should be noted that, that the bottommost-layer battery pack storage unit 51 serves as a battery pack swap window during battery swap is only an example. Adaptive adjustment may be made in practical application. For example, the last but one layer of battery pack storage units 51 serves as the battery pack swap window during battery swap. In an initial state of battery swap, the height of the battery conveying part 21 is the same as that of the last but one layer of battery pack storage units 51.

In a battery swap clearance or idle time, as shown in Fig. 4, the battery swap mechanism 2 may be lifted to reach a height corresponding to the battery pack storage units 51, so as to perform battery pack swap with the battery pack storage units 51. For example, the electricity-lack battery pack is conveyed from the bottommost layer to an idle battery pack storage unit 51 on an upper layer, or a full-electricity battery pack may also be acquired from a battery pack storage unit 51 on which the full-electricity battery pack is placed, so as to be used in the next battery swap process. The battery swap clearance refers to time when the vehicle pulls out of the battery swap platform 1 after battery swap completion and any other vehicle does not drives into the battery swap platform 1. It can thus be seen that, the automatic battery swap station takes the area where the battery swap platform 1 is located as a battery swap area for replacing the battery pack for the vehicle, and as a swap area of the electricity-lack battery pack and the full-electricity battery pack. Therefore, the floor space is fully saved.

It should be noted that, Fig. 3 and Fig. 4 only serve as an example. Structures of the battery pack storage devices 5 at the two ends of the battery swap platform 1 are exactly the same, not limited to this in the practical application. The number of layers of the battery pack storage units 51 that are specifically included in the two battery pack storage devices 5 may be set according to specific requirements.

In order to decrease frictional force between the battery pack and the battery pack storage units 51 so as to convey the battery packs therebetween, conveying parts capable of conveying the battery packs along the vehicle width direction may be arranged on the battery pack storage units 51. The conveying parts may be conveyor belts, in-line roller seats and the like.

### (IV) Charging device and control device

In addition, the automatic battery swap station further includes a charging device (not illustrated in the figure), used for charging the electricity-lack battery pack. The charging device may be arranged alone, or arranged in the battery pack storage device 5.

The automatic battery swap station further includes a control device (not illustrated in the figure), used for transmitting instructions to the battery swap platform 1, the battery swap mechanism 2, the lifting mechanism 4 and the battery pack storage units 51, so as to coordinate and control operations of the various components. The control device may control various components of the battery swap station in a wired manner, a wireless manner or a remote control manner. The control device may be arranged in the battery swap station or on the components of the battery swap station alone. For example, the control device is arranged in the battery swap platform 1. The control device may include an electrical control cabinet and a power distribution cabinet.

The embodiments of the present invention provide the automatic battery swap platform for the electric vehicle and the battery swap station. The battery swap operation is executed by lifting the battery swap mechanism during battery swap, the vehicle does not need to be lifted, high-power motor drive for vehicle lift is saved, the heights of the battery swap platform and the battery swap station can be controlled in a lower height range, and the battery swap platform and the battery swap station are applicable to small-height parking spaces such as underground garages; moreover, extra battery swap trolleys and complex lifting mechanisms are not needed, battery swap between the battery swap platform and the vehicle may be completed by virtue of the battery swap mechanism arranged on the battery swap platform, the structure is simple, and the cost is low; in addition, the battery pack storage device is arranged in a layered manner, is capable of storing multiple battery packs, increases the storage quantity of the battery packs and is provided with multiple battery swap ports, and the battery swap process is simple; and the battery swap mechanism occupies a small bottom space, stability of the battery pack lifting and stacking structure is high, the battery pack swap time is short, the battery swap process is simple, the battery swap efficiency is high, and the user experience is improved.

Based on the automatic battery swap station, the automatic battery swap station as shown in Fig. 3 and Fig. 4 is taken as an example. When an automatic battery swap operation is executed, the bottommost-layer battery pack storage unit 51 serves as a battery swap port; and before the vehicle drives into the battery swap platform 1, the various components may be located at the following positions: the battery swap mechanism 2 is located at a position that is flush with the battery swap port in both the height direction and the direction X; and the tightening gun 22 and the ejector mechanism 7 are not higher than the battery conveying part 21 in the height direction.

The specific battery swap process includes the following steps:
S1, enabling the vehicle to drive into the battery swap platform 1 and performing vehicle positioning, including positioning in directions X and Y, so that the vehicle is roughly located at a battery swap position in a horizontal direction;
S2, enabling the battery swap mechanism 2 to move to a corresponding battery swap position of the vehicle along guide rails 8, (if along the vehicle length direction, a position where the battery swap mechanism 2 and the vehicle perform battery swap is consistent with a position where the battery swap mechanism 2 and the battery swap port perform battery swap, the step is not performed);
S3, jacking the vehicle chassis to be horizontal by the ejector mechanism 7 of the vehicle;
S4, enabling the tightening gun 22 to ascend to a height exceeding the battery conveying part 21, lifting the battery swap mechanism 2 to a battery swap height by the lifting mechanism 4, starting the tightening gun, and removing an electricity-lack battery pack;
S5, enabling the tightening gun 22 and the ejector mechanism 7 to descend to a position that is lower than the battery conveying part 21, so that the electricity-lack battery pack is supported on the battery conveying part 21, and the battery swap mechanism 2 descends to a height where the battery swap port is located;
S6, enabling the battery swap mechanism 2 to move to a battery pack swap position along the guide rails 8, so as to convey the battery pack from a space between front and rear wheels (if the S2 is not needed, the S6 is correspondingly not needed);
S7, conveying the electricity-lack battery pack to one battery pack storage device 5 by the battery conveying part 21, and acquiring a full-electricity battery pack from another battery pack storage device 5.

A step of installing the battery pack corresponding to the steps S2-S6 is repeated, and the full-electricity battery pack is installed on the vehicle, thereby completing the battery swap operation.

In the battery swap clearance or idle time, the battery swap mechanism 2 is lifted to reach the height corresponding to the battery pack storage units 51, so as to perform battery pack swap with the battery pack storage units.

All the processes in an automatic battery swap method in the present invention may be automatically completed by the control device, manual battery swap is not needed, manual labor is saved, the battery swap process is simple and easy to operate, the battery swap efficiency is improved, and the user experience is improved.

The above descriptions are only the preferred embodiments of the present invention, and do not limit the present invention in any form. Although the present invention has been disclosed in the preferred embodiments as above, the preferred embodiments are not used for limiting the present invention, anyone skilled familiar with this art can make some changes or modifications by using the technical contents disclosed above to serve as equivalent embodiments of equivalent changes, without departing from the scope of the technical solutions of the present invention, and any simple modifications, equivalent changes and modifications made to the above embodiments according to the technical essence of the present invention, without departing from the contents of the technical solutions of the present invention, still fall within the scope of the technical solutions of the present invention.

## Claims

1. An automatic battery swap platform for an electric vehicle, comprising:
a battery swap mechanism used for executing a battery swap operation, wherein the battery swap mechanism comprises a tightening gun and a battery conveying part; the tightening gun is provided with a first position that is lower than the battery conveying part and a second position that is higher than the battery conveying part; one of the tightening gun and the battery conveying part may be lifted relative to the other, so that the tightening gun is switched between the first position and the second position relative to the battery conveying part; the battery conveying part is used for conveying a battery pack in a direction Y, wherein the direction Y is a vehicle width direction;
support positioning mechanisms that are located at two ends of the battery swap mechanism along a direction X, being used for supporting each wheel, wherein the direction X is a vehicle length direction; and
a lifting mechanism, which is connected to the battery swap mechanism, being used for lifting the entire battery swap mechanism.

2. The automatic battery swap platform for the electric vehicle according to claim 1, wherein two sides of the battery swap platform along the direction Y are provided with passing areas through which wheels may pass; and the battery conveying part at least extends to one of the passing areas along the direction Y, so as to convey the battery pack with a battery pack storage device outside the battery swap platform.

3. The automatic battery swap platform for the electric vehicle according to claim 2, wherein two sides of the battery swap mechanism along the direction Y are further provided with auxiliary supporting pieces; the auxiliary supporting pieces may move relative to the battery conveying part, so as to be switched between a first state and a second state;
in the first state, the auxiliary supporting pieces are located on the battery conveying part in the passing area, so as to provide support for the wheels; and
in the second state, the auxiliary supporting pieces are located below or outside the battery conveying part, so as to avoid interfering with conveying of the battery pack.

4. The automatic battery swap platform for the electric vehicle according to claim 1, wherein the battery swap mechanism further comprises a tightening gun tray used for fixing the tightening gun.

5. The automatic battery swap platform for the electric vehicle according to claim 4, wherein two sides of the tightening gun tray along the direction X are respectively provided with the battery conveying part.

6. The automatic battery swap platform for the electric vehicle according to claim 1, wherein the battery conveying part comprises rollers arranged along the direction Y.

7. The automatic battery swap platform for the electric vehicle according to claim 1, further comprising: an ejector mechanism used for acting to the vehicle chassis, so as to adjust parallelism between the vehicle chassis and the battery swap mechanism.

8. The automatic battery swap platform for the electric vehicle according to claim 1, wherein the ejector mechanism may be lifted relative to the battery conveying part, so as to move to a position that is higher than or lower than the battery conveying part.

9. The automatic battery swap platform for the electric vehicle according to claim 1, further comprising: guide rails extending along the direction X, wherein the battery swap mechanism is arranged on the guide rails and may move in the direction X along the guide rails.

10. An automatic battery swap station for an electric vehicle, comprising the battery swap platform according to claims 1-9, and further comprising a battery pack storage device located on one side or two sides of the battery swap platform along a direction Y.

11. The automatic battery swap station for the electric vehicle according to claim 10, wherein the battery conveying part extends to the battery pack storage device along the direction Y, so as to perform battery pack swap with the battery pack storage device.

12. The automatic battery swap station for the electric vehicle according to claim 11, wherein the battery pack storage device is provided with a multilayer battery pack storage unit arranged along a height direction; the battery swap mechanism is provided with a position that is basically flush with the support positioning mechanisms; and at the position, the battery conveying part is flush with the battery pack storage unit on one of the layers.

13. The automatic battery swap station for the electric vehicle according to claim 12, wherein a lift range of the lifting mechanism covers each layer of the battery pack storage unit, so that battery pack swap is performed between the battery conveying part and the battery pack storage unit on each layer.

14. The automatic battery swap station for the electric vehicle according to any one of claims 10-13, wherein two sides of the battery swap mechanism along the direction Y are respectively provided with one pair of lifting mechanisms; and the battery pack storage device is located between the pair of lifting mechanisms along the direction X and partially located in a space between the pair of lifting mechanisms.
